# EUROPEAN PATENT APPLICATION

(11) **EP 4 734 270 A1**
(43) Date of publication of application: **29.04.2026**
(21) Application number: 25206929.9
(22) Date of filing: 06.10.2025
(51) Int. Cl.: H01M 50/533, H01M 50/538, H01M 50/536, H01M 50/534, H01M 50/553, H01M 50/528, B23K 37/00, B23K 20/10

(54) **METHOD OF MANUFACTURING A BATTERY CELL**

(30) Priority: 23.10.2024 JP 2024186400
(71) Applicant: Prime Planet Energy & Solutions, Inc., Chuo-ku, Tokyo 103-0022 (JP)
(72) Inventor: SHIKATA, Katsuya, Tokyo, 103-0022 (JP)
(74) Representative: Kuhnen & Wacker Patent- und Rechtsanwaltsbüro PartG mbB

(57) **Abstract**

A method of manufacturing a battery cell (10S) including an electrode body (10) including electrode foils (1) having active material layer formed portions (11) and active material layer non-formed portions (12), and a current collecting terminal joined to the active material layer non-formed portions (12) is provided. The method includes a first step of causing the electrode foils (1) to contact with and adhere to each other in the active material layer non-formed portions (12), to form a reduced thermal resistance portion (RT) of the electrode foils (1) in which thermal resistance in a contact adhered portion of the electrode foils (1) is lower than that in a discrete portion of the electrode foils (1), and a second step of joining the electrode foils (1) and the current collecting terminal by laser welding while the reduced thermal resistance portion (RT) is in contact with the current collecting terminal to connect a nugget boundary of a laser welded portion (LY) to the reduced thermal resistance portion (RT).

## Description

### BACKGROUND

### Technical Field

The disclosure relates to a method of manufacturing battery cells for use in hybrid vehicles, electric vehicles, etc.

### Related Art

In a known manufacturing process of producing electrode bodies of battery cells used in hybrid vehicles, electric vehicles, etc., a method using ultrasonic bonding, for example, is adopted when a large number of laminated electrode foils and a current collecting terminal are joined together (see, for example, Japanese unexamined patent application publication No. 2015-217422 (JP 2015-217422 A)).

### Patent Documents

Patent Document 1: Japanese unexamined patent application publication No. 2015-217422 (JP 2015-217422 A)

When a large number of electrode foils are superposed on and joined to the current collecting terminal by ultrasonic bonding, a projection of a horn is normally brought into contact with the electrode foils with a small thickness while an anvil is brought into contact with the current collecting terminal with a large thickness, and the horn is vibrated ultrasonically to join the electrode foils to each other and to the current collecting terminal at the same time. In this case, it is difficult for the ultrasonic vibration of the horn to be transmitted to a joint between the electrode foils and the current collecting terminal, thus making it necessary to set the pressure, vibration energy, etc. of the horn to large values. Consequently, cracks and foreign matter due to vibration, etc. may be generated in the electrode foils and the cost may increase due to wear of the horn and the anvil.

### SUMMARY

### Technical Problems

Therefore, it has been considered in recent years to use laser welding to join a large number of electrode foils and a current collecting terminal that are superposed on each other. However, the electrode foil is much thinner than the current collecting terminal, and the laminated electrode foils are separated from each other; therefore, if a large number of electrode foils and the current collecting terminal superposed on each other are joined by laser welding, welding heat is likely to be excessively accumulated around a welding area of each electrode foil. This may cause problems, such as a piercing phenomenon in which the outer periphery of the welding area of the electrode foil melts down, and a necking phenomenon in which the outer periphery of the welding area of the electrode foil softens and decreases in its thickness or breaks due to contraction of the molten metal at the completion of welding.

The disclosure was developed in view of the above problems, and provides a method of manufacturing a battery cell including an electrode body, which improves heat dissipation around a welding area of each electrode foil before a large number of laminated electrode foils and a current collecting terminal are joined by laser welding, thus curbing a piercing phenomenon, a necking phenomenon, etc. at the outer periphery of the welding areas of the electrode foils.

### Means of Solving the Problems

(1) One aspect of the disclosure for solving the above problems is a method of manufacturing a battery cell including an electrode body that includes a plurality of electrode foils having active material layer formed portions and active material layer non-formed portions, and a current collecting terminal joined to the active material layer non-formed portions of the electrode foils. The method includes a first step of forming a contact adhered portion of the active material layer non-formed portions by causing the electrode foils to contact with and adhere to each other in the active material layer non-formed portions, to form a reduced thermal resistance portion of the electrode foils in which thermal resistance in the contact adhered portion is reduced to be lower than that in a discrete portion in which the active material layer non-formed portions do not adhere to each other, and a second step of joining the electrode foils and the current collecting terminal by laser welding in a condition where the reduced thermal resistance portion of the electrode foils is in contact with the current collecting terminal to connect a nugget boundary of a laser welded portion to the reduced thermal resistance portion.
(2) In the method of manufacturing the battery cell described in (1) above, in the first step, the active material layer non-formed portions of the electrode foils may be divided into a plurality of groups each having a predetermined number of the active material layer non-formed portions, which are brought into contact with and adhered to each other to form the reduced thermal resistance portion in the contact adhered portion of the active material layer non-formed portions of each of the groups, and, in the second step, the reduced thermal resistance portions formed in the first step corresponding to the respective groups of the active material layer non-formed portions may be stacked and brought into contact with the current collecting terminal, and the electrode foils and the current collecting terminal may be joined by laser welding such that the nugget boundary of the laser welded portion is connected to each of the reduced thermal resistance portions.
(3) In the method of manufacturing the battery cell described in (1) or (2) above, the reduced thermal resistance portion may be formed intermittently or continuously around the nugget boundary, and a sum of circumferential lengths of joints between the nugget boundary and the reduced thermal resistance portion may be equal to or less than an outer periphery length of the nugget boundary and may be equal to or greater than 1/2 of the outer periphery length.
(4) In the method of manufacturing the battery cell described in any one of (1) to (3) above, the reduced thermal resistance portion may be formed intermittently or continuously along a direction away from the active material layer formed portions.
(5) In the method of manufacturing the battery cell described in any one of (1) to (4) above, in the second step, the electrode foils and the current collecting terminal may be laser welded in a condition where the electrode foils are pressed against the current collecting terminal by a cooling jig that contacts the reduced thermal resistance portion.
(6) In the method of manufacturing the battery cell described in any one of (1) to (5) above, the reduced thermal resistance portion may be formed by ultrasonically bonding the active material layer non-formed portions.
(7) In the method of manufacturing the battery cell described in any one of (1) to (5) above, the reduced thermal resistance portion may be formed by pressure bonding the active material layer non-formed portions.

### BRIEF DESCRIPTION OF THE DRAWINGS

FIG. 1 is a schematic cross-sectional view of a part of a battery cell formed by a method of manufacturing the battery cell according to one embodiment of the disclosure;
FIG. 2 is a schematic cross-sectional view illustrating the state of heat dissipation of welding heat in part A shown in FIG. 1;
FIG. 3 is an enlarged schematic cross-sectional view of part C shown in FIG. 2;
FIG. 4 is a view as seen in the direction of arrow B shown in FIG. 1;
FIG. 5A is a schematic cross-sectional view of part of an ultrasonic bonding apparatus for forming reduced thermal resistance portions of electrode foils by ultrasonic bonding in a first step of manufacturing an electrode body of the battery cell shown in FIG. 1;
FIG. 5B is a schematic cross-sectional view of part of a pressure bonding apparatus for forming a reduced thermal resistance portion of the electrode foils by pressure bonding in the first step of manufacturing the electrode body of the battery cell shown in FIG. 1;
FIG. 6 is a schematic cross-sectional view of part of a welding apparatus for joining the electrode foils and the current collecting terminal by laser welding in a second step of manufacturing the electrode body of the battery cell shown in FIG. 1;
FIG. 7 is a view taken in the direction of B in a first modified example of the electrode body shown in FIG. 1;
FIG. 8 is a view taken in the direction of B in a second modified example of the electrode body shown in FIG. 1;
FIG. 9 is a view taken in the direction of B in a third modified example of the electrode body shown in FIG. 1;
FIG. 10 is a view taken in the direction of B in a fourth modified example of the electrode body shown in FIG. 1;
FIG. 11 is a view taken in the direction of B in a fifth modified example of the electrode body shown in FIG. 1;
FIG. 12 is a view taken in the direction of B in a sixth modified example of the electrode body shown in FIG. 1; and
FIG. 13 is a view taken in the direction of B in a seventh modified example of the electrode body shown in FIG. 1.

### DETAILED DESCRIPTION OF THE EXEMPLARY EMBODIMENTS

### Overall Description of Battery Cell

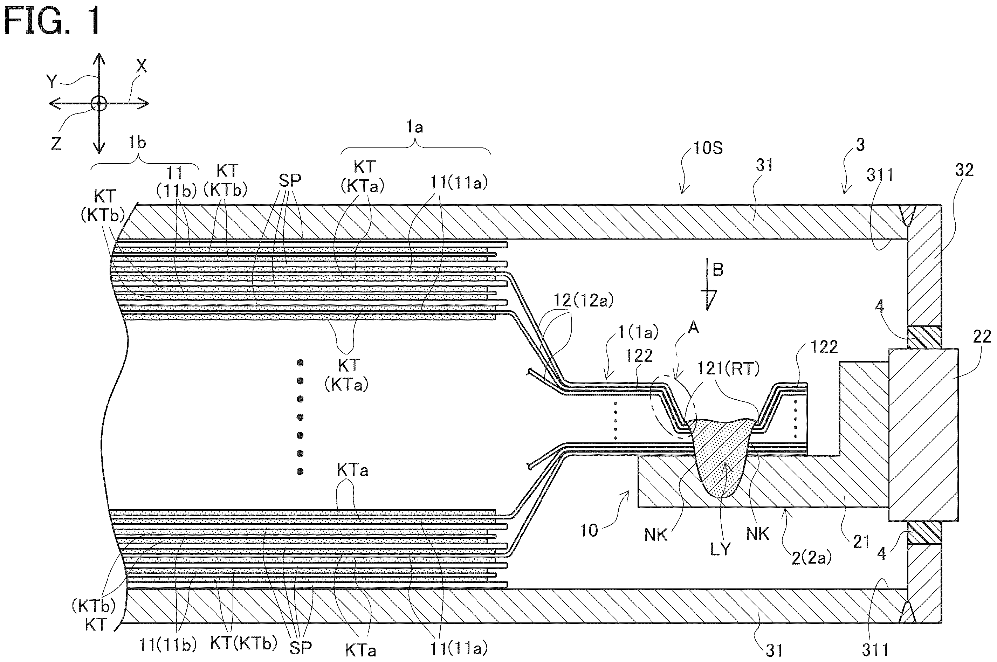

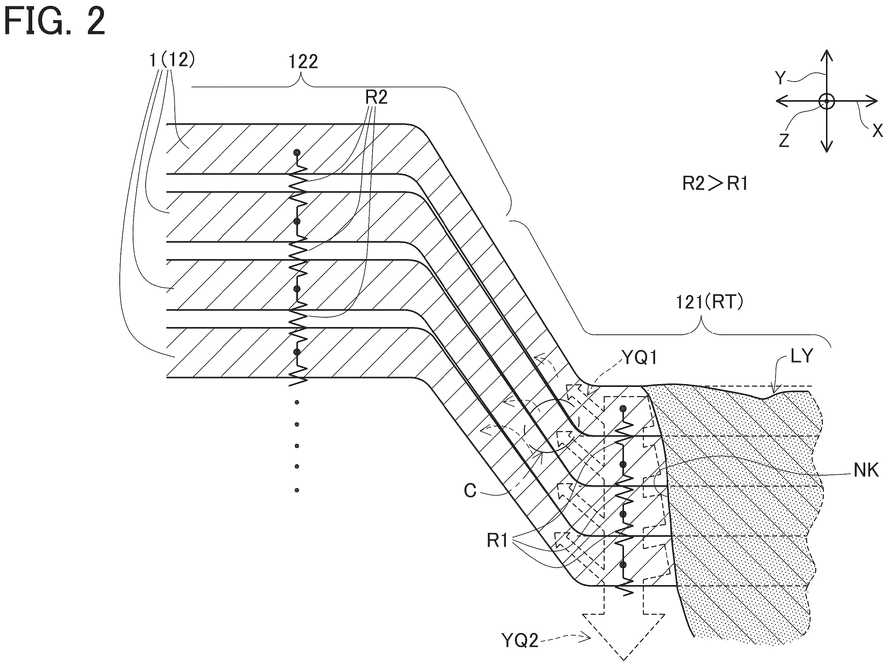

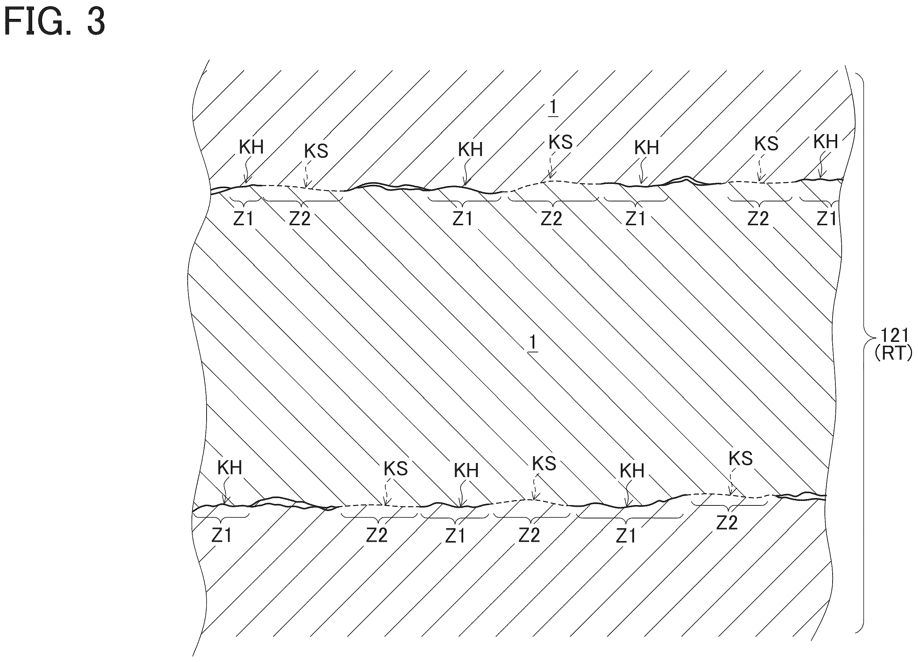

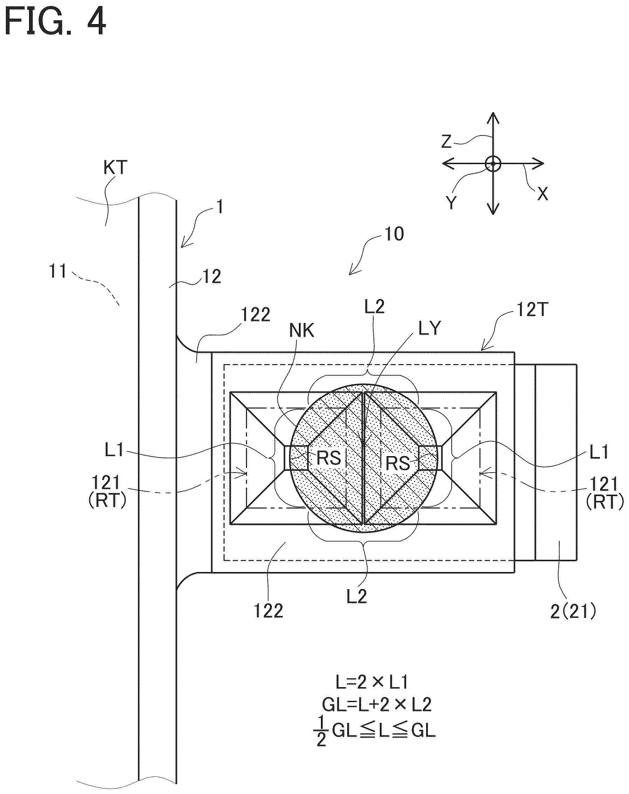

Next, the overall configuration of a battery cell formed by a method of manufacturing the battery cell according to an embodiment of the disclosure will be described in detail with reference to the drawings (FIG. 1 to FIG. 4). FIG. 1 is a schematic cross-sectional view of a part of the battery cell formed by the method of manufacturing the battery cell according to one embodiment of the disclosure. FIG. 2 is a schematic cross-sectional view illustrating the state of heat dissipation of welding heat in part A shown in FIG. 1. FIG. 3 is an enlarged schematic cross-sectional view of part C shown in FIG. 2. FIG. 4 is a view as seen in the direction of arrow B shown in FIG. 1. In each of the drawings, the X direction indicates the longitudinal direction (axial direction) of a case body, the Y direction indicates the transverse direction of the case body, and the Z direction indicates the width direction of a long side face of the case body. The Y direction is also the laminating direction of electrode foils in an electrode body.

As shown in FIG. 1 to FIG. 4, the battery cell 10S includes an electrode body 10 including a plurality of electrode foils 1 having active material layer formed portions 11 and active material layer non-formed portions 12, and current collecting terminals 2 joined to the active material layer non-formed portions 12 of the electrode foils 1. The battery cell 10S includes a battery case 3 that houses the electrode body 10. Here, the battery case 3 includes a quadrangular tube-like case body 31 having rectangular openings 311 at both ends in the longitudinal direction (the X direction), and lids 32 in the form of flat plates that seal the openings 311. The current collecting terminals 2 comprise a positive current collecting terminal 2a and a negative current collecting terminal 2b (not shown), and an external connection terminal 22 of each current collecting terminal 2 is fixed to the lid 32 via an insulating material 4. For example, polyphenylene sulfide (PPS) resin may be used as the insulating material 4. The external connection terminal 22 is electrically connected to an internal connection terminal 21 joined to the active material layer non-formed portions 12 of the electrode foils 1.

The battery case 3 is not necessarily limited to the structure described above. For example, the battery case 3 may include a tube-like case body 31with a bottom, which has an opening 311 at one end in the longitudinal direction (the X direction), and a lid 32 in the form of a flat plate that seals the opening 311. The case body 31 may also be cylindrical. The case body 31 and the lids 32 are made of aluminum, but they are not necessarily limited to aluminum and may be made of stainless steel, for example.

The electrode foils 1 include positive electrode foils 1a and negative electrode foils 1b which extend in the shape of strips with a predetermined width. The positive electrode foil 1a has an active material layer formed portion 11a of the positive electrode that is coated with active material layers KTa of the positive electrode, and an active material layer non-formed portion 12a that extends from one widthwise end portion of the active material layer formed portion 11a and is not coated with the active material layer KTa. The negative electrode foil 1b has an active material layer formed portion 11b of the negative electrode that is coated with active material layers KTb of the negative electrode, and an active material layer non-formed portion 12b (not shown) that extends from the other widthwise end portion of the active material layer formed portion 11b and is not coated with the active material layer KTb. The electrode foils 1 are wound and laminated in a flat shape, with separators SP sandwiched between the active material layer formed portions 11b of the negative electrode coated with the active material layers KTb of the negative electrode and the active material layer formed portions 11a of the positive electrode coated with the active material layers KTa of the positive electrode.

Here, the separator SP is also interposed between the active material layer formed portion 11b of the negative electrode coated with the outermost active material layer KTb of the negative electrode, and the case body 31. The active material layer non-formed portions 12a of the positive electrode and the active material layer non-formed portions 12b (not shown) of the negative electrode are arranged to be on opposite sides in the longitudinal direction (X direction) of the case body 31, but they may be arranged on the same side in the longitudinal direction (X direction) of the case body 31. The electrode foils 1 may be made by laminating the positive electrode foils 1a and the negative electrode foils 1b in the form of rectangular sheets, with the separators SP in the form of rectangular sheets sandwiched between them.

While the battery cell 10S may be applied to various types of battery cells, a lithium-ion secondary battery will be illustrated by way of example. In this case, an aluminum foil of about 10 to 15 µm thickness, for example, may be used as the positive electrode foil 1a, and lithium transition metal oxide (such as LiNi_{1/3}Co_{1/3}Mn_{1/3}O₂, LiNiO₂), for example, may be used for the active material layers KTa applied to the positive electrode foil 1a. A copper foil of about 10 to 15 µm thickness, for example, may be used as the negative electrode foil 1b, and graphite, hard carbon, soft carbon, etc. may be used for the active material layers KTb applied to the negative electrode foil 1b. An aluminum sheet of about 1 to 2 mm thickness may be used as the positive current collecting terminal 2a, and a copper sheet of about 1 to 2 mm thickness may be used as the negative current collecting terminal 2b (not shown). A porous sheet of polypropylene or polyethylene, for example, may be used as the separator SP. The electrolyte may be any known nonaqueous electrolyte.

Consider the case where the aluminum foil of about 10 to 15 µm thickness, for example, is used as the positive electrode foil 1 (1a), as described above. Since the melting point of aluminum is about 660°C and the aluminum foil of about 10 to 15 µm thickness is soft and easily undergoes thermal deformation, the individual electrode foils 1 in which heat has been excessively accumulated during laser welding of the electrode foils 1 and the current collecting terminal 2 are likely to move wildly at the outer periphery of the laser welded portion LY, resulting in piercing and necking phenomena.

Thus, as shown in FIG. 2 and FIG. 3, the electrode foils 1 of the battery cell 10S include a reduced thermal resistance portion RT in which a plurality of electrode foils 1 contact with and adhere to each other in the active material layer non-formed portions 12 to form a contact adhered portion 121 and the thermal resistance R1 in the contact adhered portion 121 of the active material layer non-formed portions 12 is reduced to be lower than the thermal resistance R2 in a discrete portion 122 where the active material layer non-formed portions 12 do not adhere to each other. The contact adhered portion 121 may be pressurized by, for example, a distal end face, inclined surfaces, etc. of a projecting portion of a horn of an ultrasonic bonding apparatus that will be described below, for example, and the surfaces of the electrode foils 1 may be at least partially in contact with each other (preferably, the area ratio of the contact portion is 30% or more) and adhere to each other. The thermal resistance R1 in portions where the active material layer non-formed portions 12 of the electrode foils 1 contact with and adhere to each other, with no air layers as heat insulators interposed therebetween, can be significantly reduced compared to the thermal resistance R2 in the discrete portion 122 in which air layers are interposed between the active material layer non-formed portions 12 of the electrode foils 1. In the contact adhered portion 121, the active material layer non-formed portions 12 of the electrode foils 1 adhere to each other; therefore, the individual electrode foils 1 are less likely or unlikely to move wildly and separate from each other due to the heat of the laser welded portion LY. Therefore, the melting heat YQ1 of one electrode foil 1 is dispersed and dissipated to other electrode foils 1 via the reduced thermal resistance portion RT so that excessive heat accumulation in each electrode foil 1 can be curbed.

As shown in FIG. 1, FIG. 2, and FIG. 4, the electrode foils 1 and the current collecting terminal 2 are joined via the laser welded portion LY in a condition where the reduced thermal resistance portion RT of the electrode foils 1 is in contact with the current collecting terminal 2 and the nugget boundary NK of the laser welded portion LY is connected to the reduced thermal resistance portion RT. In this case, the melting heat YQ2 that melts the electrode foils 1 by laser welding is dispersed and dissipated from the nugget boundary NK to the respective electrode foils 1 via the reduced thermal resistance portion RT having high thermal conductivity, so that excessive heat accumulation in each electrode foil 1 is curbed. At the same time, the melting heat YQ2 is rapidly dissipated toward the current collecting terminal 2 having larger thermal capacity than the electrode foils 1. Therefore, the piercing and necking phenomena in the electrode foils 1 at the outer periphery of the laser welded portion LY can be reduced. In this connection, the nugget boundary NK of the laser welded portion LY is only required to be in contact with the reduced thermal resistance portion RT such that heat can be transmitted therebetween; thus, the laser welded portion LY and the reduced thermal resistance portion RT are not necessarily required to overlap. In addition, the nugget boundary NK of the laser welded portion LY may not be in contact with the reduced thermal resistance portion RT over the entire circumference. However, at the completion of laser welding, the whole or part of the reduced thermal resistance portion RT connected with the nugget boundary NK of the laser welded portion LY needs to remain at least without being melted.

Here, rectangular tab portion 12T that protrude in the longitudinal direction (the X direction) away from the active material layers KT are formed in the active material layer non-formed portions 12. In the tab portion 12T, two or more (two in this embodiment) reduced thermal resistance portions RT in the shape of quadrangular truncated pyramids are continuously formed as recesses by projecting portions of a horn of an ultrasonic bonding apparatus that will be described below, for example. Then, the nugget boundary NK of the laser welded portion LY is connected to the two or more (two) reduced thermal resistance portions RT so as to connect them. The laser welded portion LY is formed in a generally circular shape in planar view. Accordingly, at least half of the reduced thermal resistance portions RT connected with the nugget boundary NK of the laser welded portion LY remains unmelted.

As shown in FIG. 4, the reduced thermal resistance portions RT are preferably formed intermittently or continuously around the nugget boundary NK, such that the sum L (2 × L1) of the circumferential lengths L1 of the joints RS between the nugget boundary NK and the reduced thermal resistance portions RT is equal to or less than the outer periphery length GL (L + 2 × L2) of the nugget boundary NK and is equal to or greater than 1/2 of the outer periphery length GL. In this case, the area of excessive heat accumulation at the nugget boundary NK is an area other than the joints RS, in which heat is not dissipated via the reduced thermal resistance portion RT, and can be reduced to 1/2 or less of the overall area along the outer periphery of the nugget boundary NK. Therefore, around the laser welded portion LY, the reduction in the bonding strength due to the piercing and necking phenomena caused by excessive heat accumulation in the electrode foils 1 can be significantly curbed, and the required bonding strength can be easily secured.

### Method of Manufacturing the Battery Cell

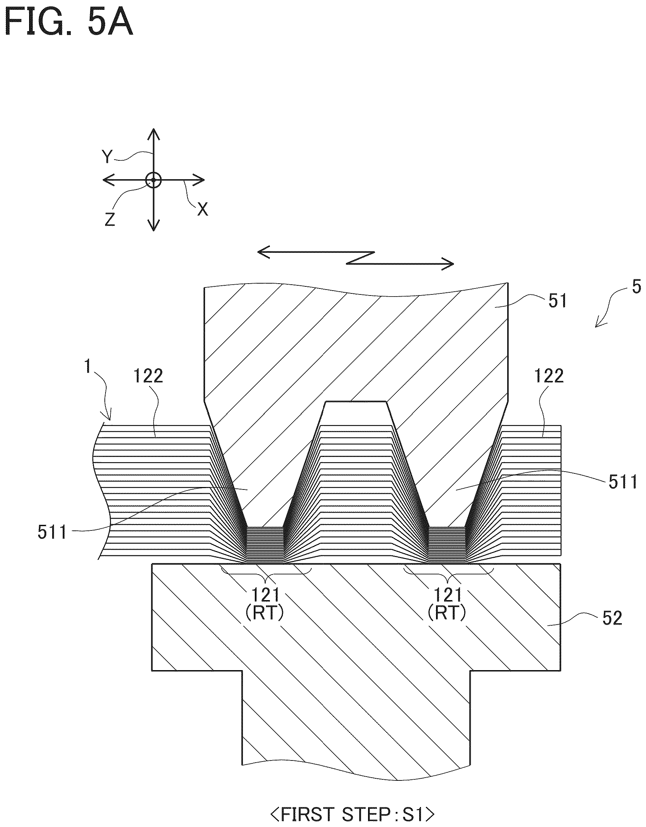

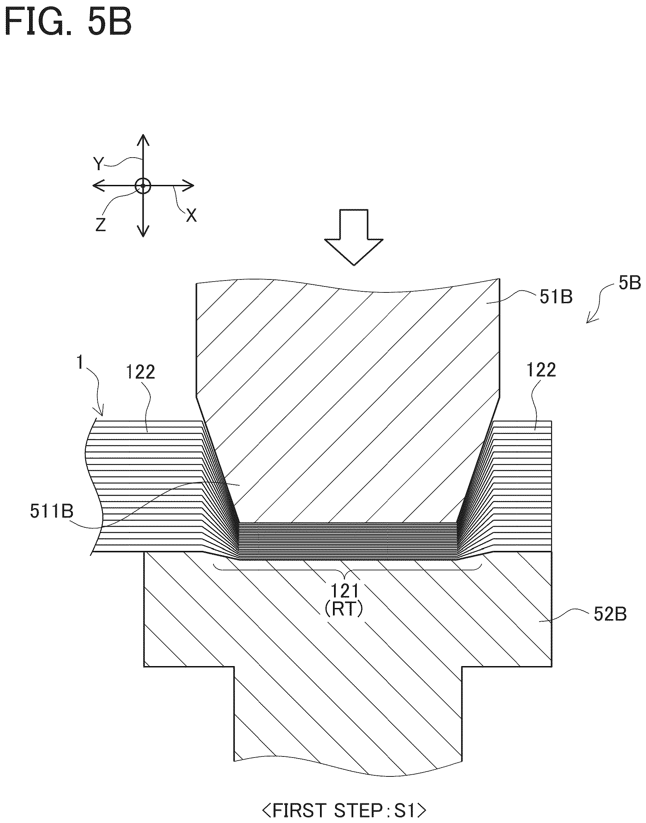

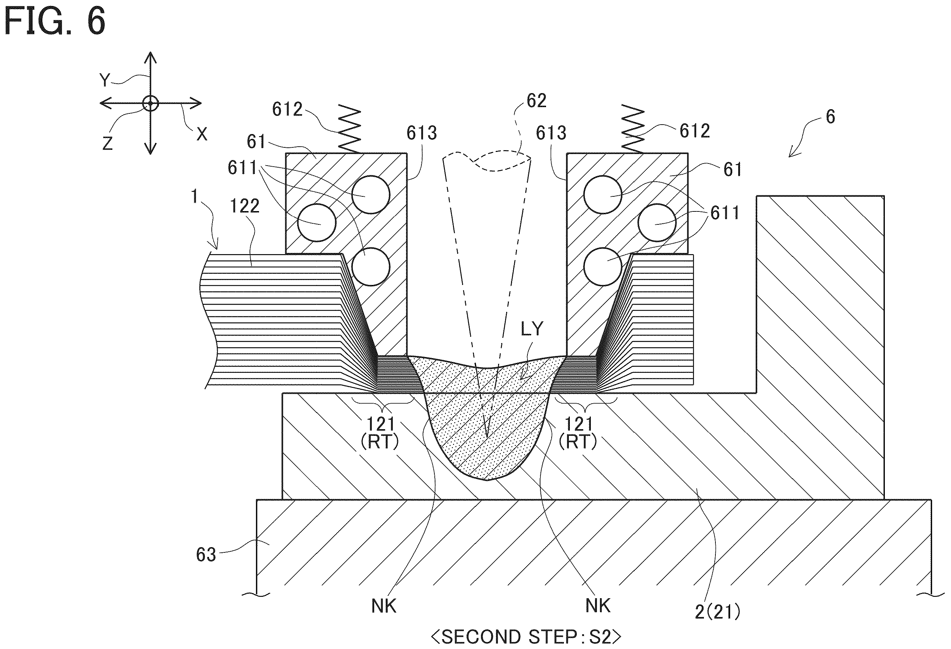

Next, a method of manufacturing the battery cell according to an embodiment of the disclosure will be described in detail with reference to the drawings (FIG. 1 to FIG. 6). FIG. 5A is a schematic cross-sectional view of part of the ultrasonic bonding apparatus for forming the reduced thermal resistance portions of the electrode foils by ultrasonic bonding, in a first step of manufacturing the electrode body of the battery cell shown in FIG. 1. FIG. 5B is a schematic cross-sectional view of part of a pressure bonding apparatus for forming the reduced thermal resistance portion of the electrode foils by pressure bonding, in the first step of manufacturing the electrode body of the battery cell shown in FIG. 1. FIG. 6 is a schematic cross-sectional view of part of a welding apparatus for joining the electrode foils and the current collecting terminal by laser welding, in a second step of manufacturing the electrode body of the battery cell shown in FIG. 1.

The method of manufacturing the battery cell 10S including the electrode body 10 that includes a plurality of electrode foils 1 having the active material layer formed portions 11 and the active material layer non-formed portions 12 and the current collecting terminals 2 joined to the active material layer non-formed portions 12 of the electrode foils 1, as shown in FIG. 1 to FIG. 6, includes the first step S1 and the second step S2. In the first step S1, the electrode foils 1 are brought into contact with and adhered to each other in the active material layer non-formed portions 12, to form the reduced thermal resistance portions RT of the electrode foils 1 in which the thermal resistance R1 in the contact adhered portions 121 of the active material layer non-formed portions 12 is reduced to be lower than the thermal resistance R2 in the discrete portion 122 in which the active material layer non-formed portions 12 do not adhere to each other. In the second step S2, in a condition where the reduced thermal resistance portions RT of the electrode foils 1 are in contact with the current collecting terminal 2, the electrode foils 1 and the current collecting terminal 2 are joined by laser welding so that the nugget boundary NK of the laser welded portion LY is connected to the reduced thermal resistance portions RT.

The method of manufacturing the battery cell 10S also includes a coating step of coating the electrode foils 1 with the active material layers KT, a drying step, a pressing step, and so forth, as pre-steps of the first step S1. The method of manufacturing the battery cell 10S also includes a battery assembling step of storing the electrode body 10 in the battery case 3 and sealing the battery case 3, an adjusting step of initial charging and aging, and so forth, as post-steps of the second step S2. Each of the above steps is a known step, and thus will not be described herein.

In the first step S1, the electrode foils 1 are brought into contact with and adhered to each other in the active material layer non-formed portions 12, to form the reduced thermal resistance portions RT of the electrode foils 1 in which the thermal resistance R1 in the contact adhered portions 121 of the active material layer non-formed portions 12 is reduced to be lower than the thermal resistance R2 in the discrete portion 122 in which the active material layer non-formed portions 12 do not adhere to each other. Since the first step S1 is provided, the contact surfaces of the active material layer non-formed portions 12 are only required to adhere to each other when the reduced thermal resistance portions RT of the electrode foils 1 are formed, and the load (the pressure, vibration energy, etc.) acting on the electrode foils 1 with a small thickness can be significantly reduced, compared to the case where the active material layer non-formed portions 12 of the electrode foils 1 and the current collecting terminal 2 are simultaneously subjected to ultrasonic bonding, for example. More specifically, the vibration frequency of the horn 51 of the ultrasonic bonding apparatus 5 and the pressure applied to the anvil 52 by the horn 51 need not be set so high that the electrode foils 1 are completely melted by friction heat. Therefore, the load acting on the thin electrode foils 1 can be reduced in the contact adhered portions 121 of the active material layer non-formed portions 12 when the reduced thermal resistance portions RT of the electrode foils 1 are formed.

Accordingly, the contact adhered portions 121 of the active material layer non-formed portions 12 are less likely or unlikely to suffer from breakage, foreign matter, etc., and the reduced thermal resistance portions RT with high thermal conductivity can be formed in the electrode foils 1 in good conditions. As a result, in the second step S2 of joining the electrode foils 1 and the current collecting terminal 2 by laser welding, the melting heat YQ1 of one electrode foil 1 is dispersed and dissipated to other electrode foils 1 via the reduced thermal resistance portions RT with high thermal conductivity, and excessive heat accumulation in each of the electrode foils 1 can be curbed. In addition, the occurrence of short circuits due to foreign matter, etc., inside the electrode body 10 can be curbed.

In the second step S2, in the condition where the reduced thermal resistance portions RT of the electrode foils 1 are in contact with the current collecting terminal 2, the electrode foils 1 and the current collecting terminal 2 are joined by laser welding so that the nugget boundary NK of the laser welded portion LY is connected to the reduced thermal resistance portions RT. Since the second step S2 is provided, the melting heat YQ2 with which the electrode foils 1 are melted by laser welding can be promptly dissipated from the nugget boundary NK toward the current collecting terminal 2 with large heat capacity, via the reduced thermal resistance portions RT. Accordingly, the method of manufacturing the battery cell 10S including the electrode body 10 while reducing piercing and necking phenomena at the outer periphery of the laser welded portion LY of the electrode foils 1 can be provided.

In the method of manufacturing the battery cell 10S, the reduced thermal resistance portion RT formed in the contact adhered portion 121 of the active material layer non-formed portions 12 preferably has at least one of anchor bonding zones Z1 where metal surfaces KH of the electrode foils 1 are anchor bonded together, and solid phase bonding zones Z2 where boundary layers KS of the electrode foils 1 are solid-phase bonded together, as shown in FIG. 3. In this case, the active material layer non-formed portions 12 of the electrode foils 1 can be more firmly adhered to each other, and the thermal resistance R1 can be reduced. Therefore, it is possible to improve the heat dissipation while curbing separation between the active material layer non-formed portions 12 in the reduced thermal resistance portion RT. As a result, around the laser welded portion LY, the reduction in the bonding strength due to the piercing and necking phenomena of the electrode foils 1 can be further curbed, and the required bonding strength can be easily secured.

In the first step S1 of forming the reduced thermal resistance portion RT of the electrode foils 1, the metal surfaces KH of the active material layer non-formed portions 12 may be subjected to fine roughening treatment with glass beads, or the like, applied to the metal surfaces KH without damaging them, for example, and then the metal surfaces KH may be brought into contact with and adhered to each other to form the contact adhered portion 121 of the active material layer non-formed portions 12. In this case, the anchor bonding zones Z1 in which the metal surfaces KH of the electrode foils 1 are anchor bonded together can be formed more effectively. The metal surfaces KH of the active material layer non-formed portions 12 may also be treated by etching, or the like, for removal of oxide films, and then brought into contact with and adhered to each other to form the contact adhered portion 121 of the active material layer non-formed portions 12. In this case, the solid phase bonding zones Z2 in which the boundary layers KS of the electrode foils 1 are solid-phase bonded to each other can be formed more effectively.

In the method of manufacturing the battery cell 10S, the reduced thermal resistance portions RT formed in the contact adhered portions 121 are preferably formed by ultrasonically bonding the active material layer non-formed portions 12 of the electrode foils 1 to each other, as shown in FIG. 5A. In this case, as shown in FIG. 3, the solid phase bonding zones Z2 are easily formed by removing oxide films, etc., by ultrasonic vibration at the boundary layers KS of the contact adhered portion 121. Therefore, the thermal resistance R1 of the reduced thermal resistance portion RT can be further reduced, and the electrode foils 1 are less likely or unlikely to peel off from each other during laser welding. As a result, the reduction in the bonding strength due to the piercing and necking phenomena of the electrode foils 1 around the laser welded portion LY can be more effectively curbed.

Compared to the case where the multiple electrode foils 1 and the current collecting terminal 2 are simultaneously subjected to ultrasonic bonding, the pressure, vibration energy, etc. of the projecting portions 511 of the horn 51 in the ultrasonic bonding apparatus 5 can be set to be smaller. Therefore, damage to the electrode foils 1, generation of foreign matter, etc. due to vibration, etc. can be reduced, and wear of the horn 51 and the anvil 52 in the ultrasonic bonding apparatus 5 can be reduced, thus curbing cost increases. As a result, the reduction in the bonding strength due to the piercing and necking phenomena of the electrode foils 1, around the laser welded portion LY, can be curbed at low cost. In this connection, the projecting portions 511 of the horn 51, which are formed in the shape of a pair of adjacent quadrangular truncated pyramids, vibrate ultrasonically in the direction (the X direction) perpendicular to the laminating direction (the Y direction) of the electrode foils 1. Therefore, the reduced thermal resistance portions RT are also formed at areas pressed by the inclined surfaces of the projecting portions 511 of the horn 51.

In the method of manufacturing the battery cell 10S, the reduced thermal resistance portion RT formed in the contact adhered portion 121 is preferably formed by bonding the active material layer non-formed portions 12 of the electrode foils 1 to each other under pressure, as shown in FIG. 5B. In this case, as shown in FIG. 3, projections and recesses are mechanically coupled at the metal surfaces KH of the contact adhered portion 121 to easily form the anchor bonding zones Z1. Therefore, the thermal resistance R1 of the reduced thermal resistance portion RT can be further reduced, and the electrode foils 1 are less likely or unlikely to peel off from each other during laser welding. As a result, the reduction in the bonding strength due to the piercing and necking phenomena of the electrode foils 1 around the laser welded portion LY can be more effectively curbed.

Compared to the case where the multiple electrode foils 1 and the current collecting terminal 2 are simultaneously subjected to pressure bonding, the pressing force, etc. of the pressure bonding apparatus 5B can be set to be smaller. Therefore, damage to the electrode foils 1, generation of foreign matter, etc. due to pressure bonding can be reduced, and wear of a punch 51B and a die 52B in the pressure bonding apparatus 5B can be reduced, thus curbing cost increases. As a result, the reduction in the bonding strength due to the piercing and necking phenomena of the electrode foils 1 around the laser welded portion LY can be curbed at low cost. Since the punch 51B of the pressure bonding apparatus 5B is formed in the shape of a quadrangular truncated pyramid and presses the electrode foils 1 in the laminating direction (the Y direction), the reduced thermal resistance portions RT are also formed at areas pressed by the inclined surfaces of the punch 51B. The method of forming the reduced thermal resistance portion RT in the contact adhered portion 121 is not limited to the ultrasonic bonding and pressure bonding as described above, but various methods may be used.

In the method of manufacturing the battery cell 10S, in the second step S2, it is preferable to laser weld the electrode foils 1 to the current collecting terminal 2 while the electrode foils 1 are pressed against the current collecting terminal 2 by a cooling jig 61 that contacts the reduced thermal resistance portion RT, as shown in FIG. 6. In this case, the melting heat YQ1, YQ2 that melts the electrode foils 1 by laser welding can be dispersed and dissipated from the reduced thermal resistance portion RT not only to the current collecting terminal 2 but also to the cooling jig 61. Therefore, the reduction in the bonding strength due to the piercing and necking phenomena of the electrode foils 1 around the laser welded portion LY can be further curbed.

A welding apparatus 6 used in the second step S2 includes the cooling jig 61 that contacts the reduced thermal resistance portion RT, a laser beam radiating portion 62 that radiates a laser beam, and a current collecting terminal receiving jig 63 that receives the internal connection terminal 21 of the current collecting terminal 2. The laser beam of the laser beam radiating portion 62 is emitted from above the electrode foils 1. The cooling jig 61 has a refrigerant flow path 611 through which the refrigerant passes, and a transmission hole 613 through which the laser beam is transmitted. The cooling jig 61 presses the electrode foils 1 against the current collecting terminal 2 via a spring member 612, or the like. The laser-beam transmission hole 613 is preferably formed along the nugget boundary NK of the laser welded portion LY or its vicinity. This is because the melting heat of the laser welded portion LY can be more reliably dissipated from the nugget boundary NK to both the current collecting terminal 2 and the cooling jig 61 via the reduced thermal resistance portion RT. A refrigerant flow path through which the refrigerant passes may also be formed in the current collecting terminal receiving jig 63.

### Modified Examples

The embodiment described in detail is a mere example and does not limit the disclosure in any way. Thus, various improvements and modifications of the disclosure are possible within the scope that does not depart from the principle thereof.

### (Modified example of the method of manufacturing the battery cell)

In the method of manufacturing the battery cell described above, in the first step S1, multiple electrode foils 1 are brought into contact with and adhered to each other in the active material layer non-formed portions 12 to form the reduced thermal resistance portion RT of the electrode foils 1 in which the thermal resistance R1 in the contact adhered portion 121 of the active material layer non-formed portions 12 is reduced to be lower than the thermal resistance R2 in the discrete portion 122 in which the active material layer non-formed portions 12 do not adhere to each other. In the second step S2, the electrode foils 1 and the current collecting terminal 2 are joined by laser welding in a condition where the reduced thermal resistance portion RT of the electrode foils 1 is in contact with the current collecting terminal 2 so that the nugget boundary NK of the laser welded portion LY is connected to the reduced thermal resistance portion RT. However, the manufacturing method is not necessarily limited to the above method.

As a modified example of the battery cell manufacturing method, in the first step S1, for example, the active material layer non-formed portions 12 of a plurality of electrode foils 1 may be divided into two or more groups each having a predetermined number of the portions 12, which are brought into contact with and adhered to each other, and the reduced thermal resistance portion RT may be formed in the contact adhered portion 121 of the active material layer non-formed portions 12 of each group. Then, in the second step S2 of the method of manufacturing the battery cell 10S, the reduced thermal resistance portions RT of the respective groups formed in the first step S1 may be stacked and brought into contact with the current collecting terminal 2, and the electrode foils 1 and the current collecting terminal 2 may be joined by laser welding so that the nugget boundary NK of the laser welded portion LY is connected to each reduced thermal resistance portion RT. For example, in 100 sheets of electrode foils 1 laminated, when the active material layer non-formed portions 12 are divided into two groups each having 50 sheets and the 50 sheets are brought into contact with and adhered to each other, the load acting on the electrode foils 1 at this time can be reduced to about 1/2. In this case, when the active material layer non-formed portions 12 of the electrode foils 1 are brought into contact with and adhere to each other, the load acting on the electrode foils 1 can be reduced by the amount corresponding to the number of groups into which they are divided. As a result, damage to the electrode foils 1 and generation of foreign matter can be reduced, and the battery cell 10S with improved quality can be formed.

### (Modified examples of the electrode body formed by the battery cell manufacturing method)

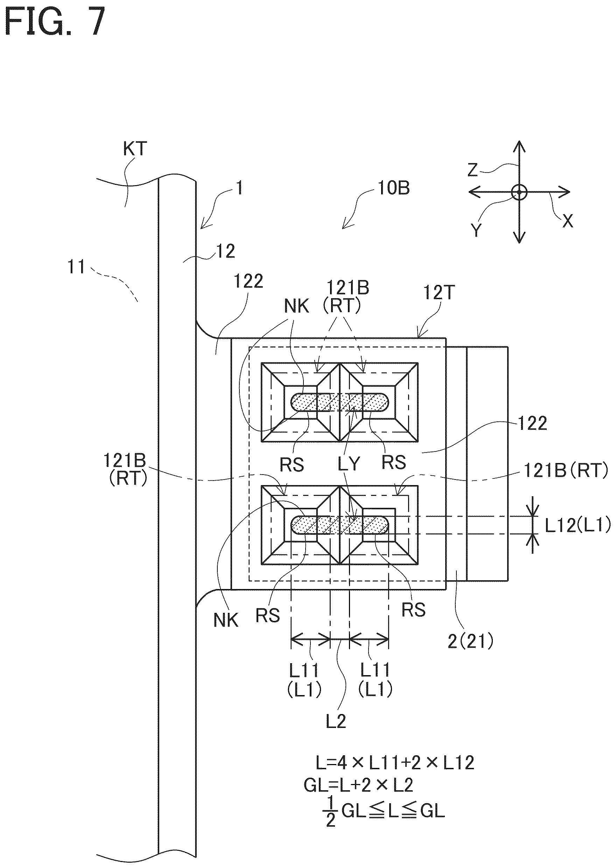

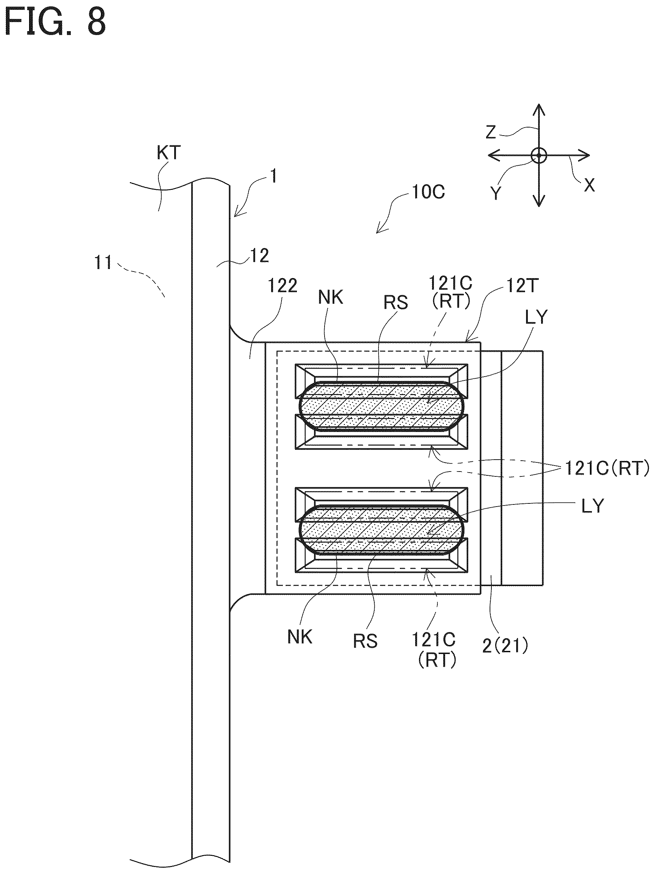

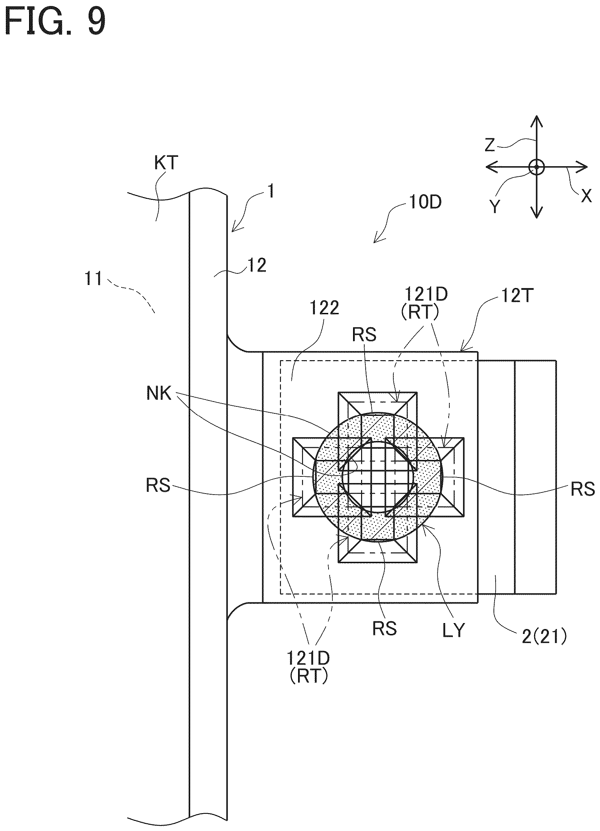

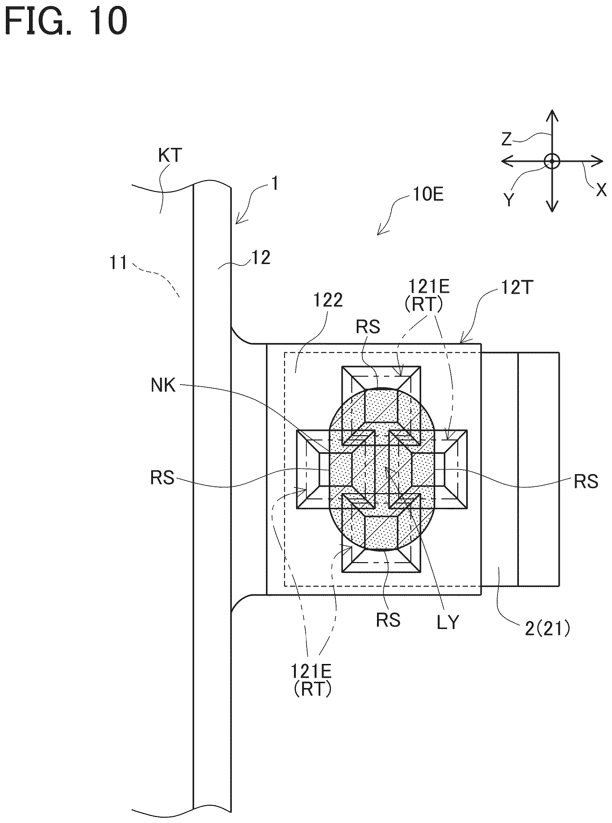

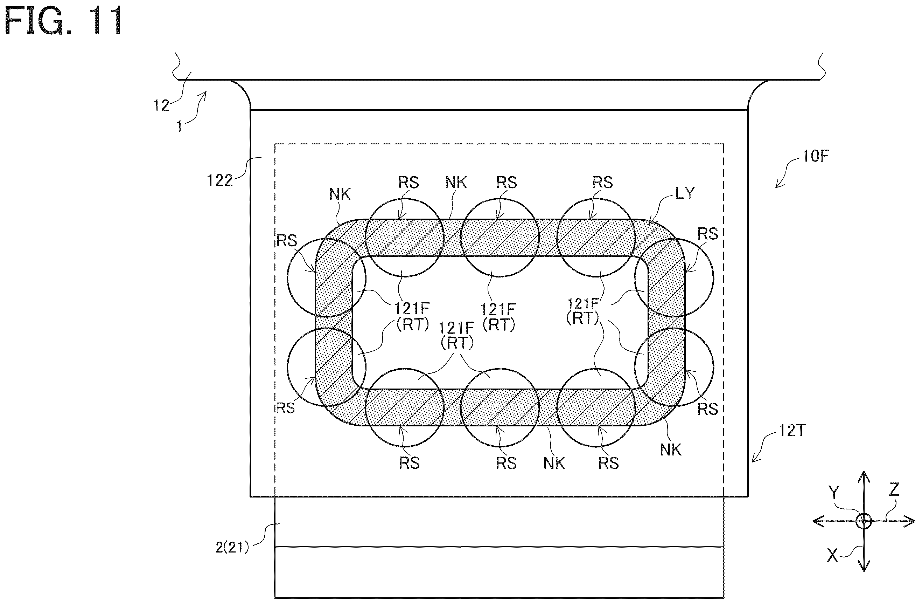

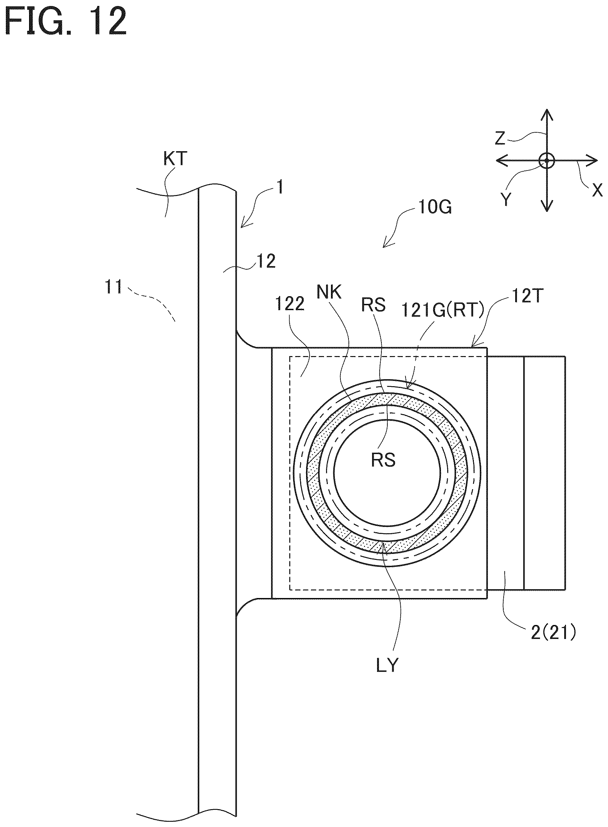

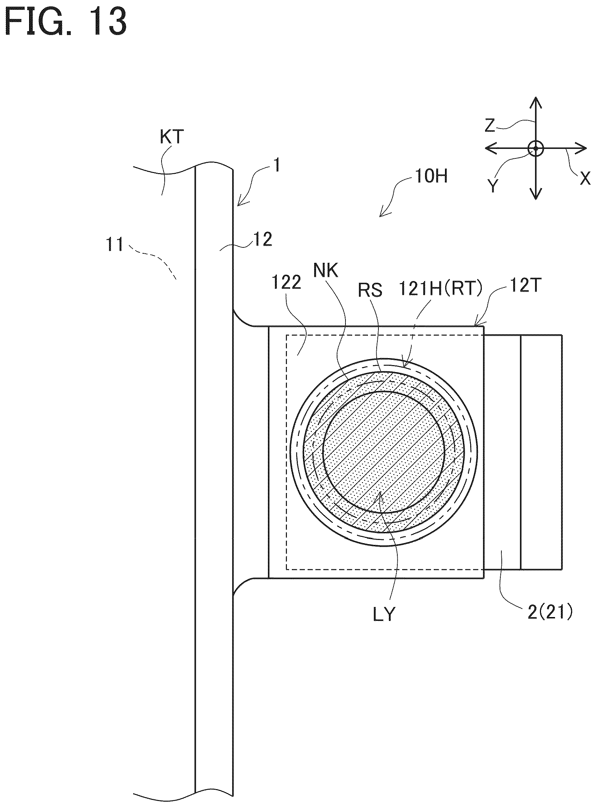

Next, first to seventh modified examples of the electrode body formed by the method of manufacturing the battery cell according to the embodiment of the disclosure will be described in detail with reference to the drawings. FIG. 7 shows a first modified example of the electrode body shown in FIG. 1 as seen in the direction of arrow B. FIG. 8 shows a second modified example of the electrode body shown in FIG. 1 as seen in the direction of arrow B. FIG. 9 shows a third modified example of the electrode body shown in FIG. 1 as seen in the direction of arrow B. FIG. 10 shows a fourth modified example of the electrode body shown in FIG. 1 as seen in the direction of arrow B. FIG. 11 shows a fifth modified example of the electrode body shown in FIG. 1 as seen in the direction of arrow B. FIG. 12 shows a sixth modified example of the electrode body shown in FIG. 1 as seen in the direction of arrow B. FIG. 13 shows a seventh modified example of the electrode body shown in FIG. 1 as seen in the direction of arrow B.

### (First and second modified examples of the electrode body)

In the electrode bodies 10B, 10C of the first and second modified examples formed according to the method of manufacturing the battery cell 10S, the reduced thermal resistance portions RT are formed intermittently or continuously along the direction away from the active material layer formed portions 11, as shown in FIG. 7 and FIG. 8. Accordingly, the active material layers KT of the electrode foils 1 are less likely to be affected by the heat dissipated from the nugget boundary NK via the reduced thermal resistance portions RT, and deterioration of the active material layers KT can be reduced. Therefore, the electrode body 10 with even higher quality is easily secured. The laser welded portions LY may be formed continuously or intermittently. The welding width of the continuously formed laser welded portion LY may be narrower as it is closer to the active material layer formed portions 11. In this case, the melting heat of the laser welded portion LY is reduced as it is closer to the active material layer formed portions 11, and deterioration of the active material layers KT can be further reduced.

In the electrode body 10B of the first modified example, as shown in FIG. 7, rectangular tab portion 12T that protrude in the longitudinal direction (the X direction) away from the active material layers KT are formed in the active material layer non-formed portions 12. In the tab portion 12T, two or more rows (two parallel rows) of two or more (two) quadrangular truncated pyramid-shaped reduced thermal resistance portions RT are formed intermittently or continuously along the longitudinal direction (the X direction) away from the active material layer formed portions 11, in contact adhered portions 121B concavely formed by the projecting portions 511 of the horn 51 of the ultrasonic bonding apparatus 5 described above, for example. The nugget boundary NK of the laser welded portion LY is connected to the two or more (two) reduced thermal resistance portions RT in each row so as to connect them on the inner circumference side of the reduced thermal resistance portions RT. The laser welded portion LY is formed in an elliptical shape in planar view along the longitudinal direction (the X direction). In this case, the heat dissipation to the current collecting terminal 2 can be further enhanced, and deterioration of the active material layers KT can be further reduced.

As shown in FIG. 7, the reduced thermal resistance portions RT are formed intermittently or continuously around the nugget boundary NK of each row, and the sum L of the circumferential lengths L1 (4 × L11 + 2 × L12) of the joints RS between the nugget boundary NK and the reduced thermal resistance portions RT is equal to or less than the outer periphery length GL (L + 2 × L2) of the nugget boundary NK and is equal to or greater than 1/2 of the outer periphery length GL. In this case, the area of excessive heat accumulation in the nugget boundary NK can be limited to the area other than the joints RS between the nugget boundary NK and the reduced thermal resistance portions RT, and can be reduced to 1/2 or less at the outer periphery of the nugget boundary NK. Therefore, the reduction in the bonding strength due to the piercing and necking phenomena of the electrode foils 1 around the laser welded portion LY can be significantly curbed, and the required bonding strength can be easily secured.

In the electrode body 10C of the second modified example, as shown in FIG. 8, rectangular tab portion 12T that protrude in the longitudinal direction (the X direction) away from the active material layers KT are formed in the active material layer non-formed portions 12. In the tab portion 12T, two or more (four) quadrangular truncated pyramid-shaped reduced thermal resistance portions RT are formed in a parallel and continuous (elongate) fashion along the longitudinal direction (the X direction) away from the active material layer formed portions 11, in contact adhered portions 121C concavely formed by the projecting portions 511 of the horn 51 of the ultrasonic bonding apparatus 5 described above, for example. The nugget boundary NK of the laser welded portion LY is connected to the two adjacent rows of reduced thermal resistance portions RT so as to connect them on the outer circumference side of the reduced thermal resistance portions RT. In this case, the welding width of the laser welded portion LY may be expanded to increase the welding strength, while reducing the deterioration of the active material layers KT. The laser welded portion LY is formed in a long elliptical shape (a shape in which two opposing straight lines are parallel and the opposite ends of the lines are connected by semicircles) with substantially the same length as the reduced thermal resistance portions RT in planar view along the longitudinal direction (the X direction).

### (Third, fourth, and fifth modified examples of the electrode body)

In the electrode bodies 10D, 10E, 10F of the third, fourth, and fifth modified examples formed according to the method of manufacturing the battery cell 10S, the reduced thermal resistance portions RT are formed intermittently around the nugget boundary NK, as shown in FIG. 9, FIG. 10, and FIG. 11, and the sum of the circumferential lengths of the joints RS between the nugget boundary NK and the reduced thermal resistance portions RT is equal to or less than the outer periphery length of the nugget boundary NK and is equal to or greater than 1/2 of the outer periphery length. In this case, the area of excessive heat accumulation in the nugget boundary NK can be reduced to 1/2 or less on the outer periphery of the nugget boundary NK. Therefore, the reduction in the bonding strength due to the piercing and necking phenomena of the electrode foils 1 around the laser welded portion LY can be significantly curbed, and the required bonding strength can be easily secured.

In the electrode body 10D of the third modified example, rectangular tab portion 12T protruding in the longitudinal direction (the X direction) away from the active material layers KT are formed in the active material layer non-formed portions 12, as shown in FIG. 9. In the tab portion 12T, two or more (four) regular quadrangular truncated pyramid-shaped reduced thermal resistance portions RT are formed intermittently at intervals of 90 degrees around the nugget boundary NK, in contact adhered portions 121D concavely formed by the projecting portions 511 of the horn 51 of the ultrasonic bonding apparatus 5 described above, for example, and the sum of the circumferential lengths of the joints RS between the nugget boundary NK and the reduced thermal resistance portions RT is equal to or less than the outer periphery length of the nugget boundary NK and equal to or greater than 1/2 of the outer periphery length. The nugget boundary NK of the laser welded portion LY is connected to the two or more (four) reduced thermal resistance portions RT to connect them. The laser welded portion LY is formed in a circular annular shape in planar view. In this case, the melting heat of the laser welded portion LY is reduced so that the necking phenomenon, etc. can be further reduced. The two or more (four) regular quadrangular truncated pyramid-shaped reduced thermal resistance portions RT can be formed by rotating the horn 51 having two projecting portions 511 horizontally by 90 degrees. The two or more (four) regular quadrangular truncated pyramid-like reduced thermal resistance portions RT may be arranged such that the corners of the regular quadrangular truncated pyramids are concentrated in the center of the annular laser welded portion LY.

In the electrode body 10E of the fourth modified example, rectangular tab portion 12T protruding in the longitudinal direction (the X direction) away from the active material layers KT are formed in the active material layer non-formed portions 12, as shown in FIG. 10. In the tab portion 12T, two or more (four) regular quadrangular truncated pyramid-shaped reduced thermal resistance portions RT are formed intermittently at different intervals around the nugget boundary NK, in contact adhered portions 121E concavely formed by the projecting portions 511 of the horn 51 of the ultrasonic bonding apparatus 5 described above, and the sum of the circumferential lengths of the joints RS between the nugget boundary NK and the reduced thermal resistance portions RT is equal to or less than the outer periphery length of the nugget boundary NK and is equal to or greater than 1/2 of the outer periphery length. The nugget boundary NK of the laser welded portion LY is connected to the two or more (four) reduced thermal resistance portions RT to connect them. The laser welded portion LY is formed in a long elliptical shape in planar view. In this case, the welding strength of the laser welded portion LY can be further improved.

In the electrode body 10F of the fifth modified example, rectangular tab portion 12T protruding in the longitudinal direction (the X direction) away from the active material layers KT are formed in the active material layer non-formed portions 12, as shown in FIG. 11. In the tab portion 12T, two or more (ten) circular reduced thermal resistance portions RT are formed intermittently at substantially equal intervals around the nugget boundary NK, in contact adhered portions 121F formed concavely by the punch 51B of the pressure bonding apparatus 5B described above, for example, and the sum of the circumferential lengths of the joints RS between the nugget boundary NK and the reduced thermal resistance portions RT is equal to or less than the outer periphery length of the nugget boundary NK and is equal to or greater than 1/2 of the outer periphery length. The nugget boundary NK of the laser welded portion LY is connected to the two or more (ten) reduced thermal resistance portions RT to connect them. The laser welded portion LY is formed in a hollow quadrangular or frame-like shape in planar view. In this case, it is possible to increase the welding length while reducing the welding area of the laser welded portion LY; therefore, both the reduction of the necking phenomenon, etc. and the improvement of the welding strength can be achieved.

### (Sixth and seventh modified examples of the electrode body)

In the electrode bodies 10G, 10H of the sixth and seventh modified examples formed according to the method of manufacturing the battery cell 10S, the reduced thermal resistance portion RT is formed continuously around the nugget boundary NK, as shown in FIG. 12 and FIG. 13, and the sum of the circumferential lengths of the joints RS between the nugget boundary NK and the reduced thermal resistance portion RT is approximately the same as the outer periphery length of the nugget boundary NK. In this case, the area of excessive heat accumulation in the nugget boundary NK can be substantially eliminated. Therefore, the reduction in the bonding strength due to the piercing and necking phenomena of the electrode foils 1 around the laser welded portion LY can be significantly curbed, and the required bonding strength can be easily secured.

In the electrode body 10G of the sixth modified example, rectangular tab portion 12T protruding in the longitudinal direction (the X direction) away from the active material layers KT are formed in the active material layer non-formed portions 12, as shown in FIG. 12. In the tab portion 12T, an annular truncated cone-shaped reduced thermal resistance portion RT is formed continuously around the nugget boundary NK, in a contact adhered portion 121G concavely formed by the projecting portion 511 of the horn 51 of the ultrasonic bonding apparatus 5 or the punch 51B of the pressure bonding apparatus 5B described above, for example, and the sum of the circumferential lengths of the joints RS between the nugget boundary NK and the reduced thermal resistance portion RT is approximately the same as the outer periphery length of the nugget boundary NK. The nugget boundary NK of the laser welded portion LY is connected to the reduced thermal resistance portion RT in the area of the annular truncated cone-shaped reduced thermal resistance portion RT. The laser welded portion LY is formed in a circular annular shape in planar view. In this case, the melting heat of the laser welded portion LY can be reduced, and the laser welded portion LY can be made more compact while further reducing the necking phenomenon.

In the electrode body 10H of the seventh modified example, rectangular tab portion 12T protruding in the longitudinal direction (the X direction) away from the active material layers KT are formed in the active material layer non-formed portions 12, as shown in FIG. 13. In the tab portion 12T, an annular truncated cone-shaped reduced thermal resistance portion RT is formed continuously around the nugget boundary NK, in a contact adhered portion 121H concavely formed by the projecting portion 511 of the horn 51 of the ultrasonic bonding apparatus 5 or the punch 51B of the pressure bonding apparatus 5B described above, for example, and the total circumferential length of the joint RS between the nugget boundary NK and the reduced thermal resistance portion RT is approximately the same as the outer periphery length of the nugget boundary NK. The nugget boundary NK of the laser welded portion LY is connected to the reduced thermal resistance portion RT in the area of the annular truncated cone-shaped reduced thermal resistance portion RT. The laser welded portion LY is formed in a circular shape in planar view. In this case, the laser welded portion LY can be made more compact while increasing the welding strength of the laser welded portion LY.

In the electrode body 10 and its modified examples 10B to 10H of the battery cell 10S described in detail, various forms of connection between the nugget boundary NK of the laser welded portion LY and the reduced thermal resistance portion or portions RT are not limited to the forms shown in FIG. 4, FIG. 7 to FIG. 13, but two or more of the above forms may be arranged adjacent to each other.

### Reference Signs List

- 1: Electrode foil
- 2: Current collecting terminal
- 10: Electrode body
- 11: Active material layer formed portion
- 12: Active material layer non-formed portion
- 61: Cooling jig
- 121: Contact adhered portion
- 122: Discrete portion
- KH: Metal surface
- KS: Boundary layer
- LY: Laser welded portion
- NK: Nugget boundary
- R1, R2: Thermal resistance
- RS: Joint
- RT: Reduced thermal resistance portion
- S1: First step
- S2: Second step

## Claims

1. A method of manufacturing a battery cell (10S) including an electrode body (10) that includes a plurality of electrode foils (1) having active material layer formed portions (11) and active material layer non-formed portions (12), and a current collecting terminal (2) joined to the active material layer non-formed portions (12) of the electrode foils (1),
**characterized by** the method comprising:
(S1) forming a contact adhered portion (121) of the active material layer non-formed portions (12) by causing the electrode foils (1) to contact with and adhere to each other in the active material layer non-formed portions (12), to form a reduced thermal resistance portion (RT) of the electrode foils (1) in which thermal resistance (R1) in the contact adhered portion (121) is reduced to be lower than thermal resistance (R2) in a discrete portion (122) in which the active material layer non-formed portions (12) do not adhere to each other; and
(S2) joining the electrode foils (1) and the current collecting terminal (2) by laser welding in a condition where the reduced thermal resistance portion (RT) of the electrode foils (1) is in contact with the current collecting terminal (2) to connect a nugget boundary (NK) of a laser welded portion (LY) to the reduced thermal resistance portion (RT).

2. The method according to claim 1, wherein:
in forming the contact adhered portion (S1), the active material layer non-formed portions (12) of the electrode foils (1) are divided into a plurality of groups each having a predetermined number of the active material layer non-formed portions (12), which are brought into contact with and adhered to each other to form the reduced thermal resistance portion (RT) in the contact adhered portion of the active material layer non-formed portions (12) of each of the groups; and
the reduced thermal resistance portions (RT) corresponding to the respective groups of the active material layer non-formed portions (12) are stacked and brought into contact with the current collecting terminal (2), and the electrode foils (1) and the current collecting terminal (2) are joined by laser welding such that the nugget boundary (NK) of the laser welded portion (LY) is connected to each of the reduced thermal resistance portions (RT).

3. The method according to claim 1 or 2, wherein:
the reduced thermal resistance portion (RT) is formed intermittently or continuously around the nugget boundary (NK); and
a sum of circumferential lengths (L1) of joints (RS) between the nugget boundary (NK) and the reduced thermal resistance portion (RT) is equal to or less than an outer periphery length (GL) of the nugget boundary (NK) and is equal to or greater than 1/2 of the outer periphery length (GL).

4. The method according to any one of claims 1 to 3, wherein the reduced thermal resistance portion (RT) is formed intermittently or continuously along a direction away from the active material layer formed portions (11).

5. The method according to any one of claims 1 to 4, wherein the electrode foils (1) and the current collecting terminal (2) are laser welded in a condition where the electrode foils (1) are pressed against the current collecting terminal (2) by a cooling jig that contacts the reduced thermal resistance portion (RT).

6. The method according to any one of claims 1 to 5, wherein the reduced thermal resistance portion (RT) is formed by ultrasonically bonding the active material layer non-formed portions (12).

7. The method according to any one of claims 1 to 5, wherein the reduced thermal resistance portion (RT) is formed by pressure bonding the active material layer non-formed portions (12).
